# EUROPÄISCHE PATENTSCHRIFT

(11) **EP 2 186 619 B1**
(45) Veröffentlichungstag und Bekanntmachung des Hinweises auf die Patenterteilung: **13.10.2010**
(21) Anmeldenummer: 08405281.0
(22) Anmeldetag: 18.11.2008
(51) Int. Cl.: B29C 49/12, B29C 49/42, B29C 49/06

(54) **Vorrichtungen und Verfahren zum Steckblasformen eines Behälters und die entsprechende Verwendung.**
Devices and method for blow moulding a container and the corresponding use.
Dispositifs et procédé de moulage par soufflage d'un récipient et l'usage correspondant.

(43) Veröffentlichungstag der Anmeldung: 19.05.2010
(73) Patentinhaber: EUGEN SEITZ AG, CH-8623 Wetzikon (CH)
(72) Erfinder: Schmidt, Joachim, 8442 Hettlingen (CH)
(74) Vertreter: EGLI-EUROPEAN PATENT ATTORNEYS

(56) Entgegenhaltungen:
- WO-A-2006/108380
- DE-C1- 10 053 901
- GB-A- 2 358 967

## Beschreibung

Die Erfindung betrifft eine Vorrichtung zum Blasformen eines Behälters nach dem Oberbegriff der Ansprüche 1 bzw. 8, sowie die Verwendung eines tubularen elektrischen Linearmotors in einer solchen Vorrichtung.

Derartige Blasvorrichtungen werden beispielsweise in Hohlkörper-Streckblasmaschinen eingesetzt, bei denen ein Vorformling bei einer thermischen Konditionierung innerhalb einer Blasform von der Reckstange gereckt und durch Blasdruckeinwirkung in den Behälter umgeformt wird. Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt.

Typischerweise weist eine derartige Blasmaschine mehrere Blasstationen auf, die auf einem gemeinsamen Blasrad angeordnet sind, und die jeweils eine Blasvorrichtung sowie ein Formwerkzeug umfassen, in dem der zuvor temperierte Vorformling durch biaxiale Orientierung zu einem Behälter expandiert wird. Eine Heizstation zum Vorwärmen der Vorformlinge ist dabei üblicherweise nicht auf dem Blasrad selbst, sondern in einem vorhergehenden Durchlaufofen angesiedelt. Die Expansion der Vorformlinge erfolgt üblicherweise mit Hilfe von Druckluft, die in den zu expandierenden Vorformling eingeleitet wird, während gleichzeitig die Reckstange zum Führen des Vorformlings ausgefahren wird.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Reckstangen werden hierbei häufig von pneumatischen Zylindern und meist in Kombination mit einer mechanischen Kulisse positioniert, wodurch die Blasvorrichtungen nicht nur eine enorme Bauhöhe erreichen, sondern auf Grund der schweren beweglichen Teile sowie der durch die Gegenwirkung in der Kulisse auftretenden Kräfte, auch noch eine besonders stabile Auslegung erfordert. Dadurch wird das schon hohe Gewicht einer solchen Vorrichtung zusätzlich erhöht, und deren z.B. rotatorische Bewegung in einer Blasmaschine benötigt viel Energie. Ebenso ist der Energieverbrauch durch Verwendung von Druckluft als Antriebsmedium sehr hoch. Eine pneumatisch / mechanische Positionierung der Reckstangen erhöht damit gleichermassen die Herstellungs- wie Betriebskosten einer derart ausgelegten Blasmaschine.

Aus der DE-OS 103 25 229 ist es bereits bekannt, zur Positionierung einer Reckstange einen elektrischen Linearantrieb einzusetzen, der ähnlich zum Funktionsprinzip des Transrapid-Bahnsystems konstruiert ist. Derartige Linearmotoren ermöglichen eine hochgenaue Reproduzierbarkeit bei der Durchführung von Reckbewegungen, weisen jedoch ein vergleichsweise hohes Baugewicht und einen hohen Preis auf.

Die WO 2006/108380 versucht dieses Problem durch Kombination eines Fluidantriebs und eines elektrischen Linearmotors zu lösen, und damit die Vorteile der jeweiligen Antriebssysteme miteinander zu vereinen. Fluidantriebe, insbesondere pneumatische oder hydraulische Antriebe, ermöglichen im Rahmen von Steuerungen eine sehr schnelle Durchführung von Positionierbewegungen bei hohen erzeugbaren Kräften und geringem Baugewicht. Insbesondere bei einer sehr schnellen Durchführung von Positionierbewegungen weisen die Fluidantriebe jedoch Nachteile hinsichtlich der Positioniergenauigkeit auf, da Regelungsvorgänge unter Berücksichtigung der Systemträgheiten nur eingeschränkt realisierbar sind. Durch die Kombination eines Fluidantriebs mit einem elektrischen Linearmotor soll es nun möglich sein, einen Linearmotor mit relativ geringer Leistung und somit auch geringem Preis und geringem Baugewicht zu verwenden und diesen lediglich zu einer Korrektur der Beschleunigungs- bzw. Bremskräfte des Fluidantriebs zu verwenden. Ein entscheidender Nachteil dieser Kombination besteht allerdings darin, dass weder das Gewicht noch die Baugrösse einer Blasmaschine entscheidend verringert werden kann, da zusätzlich zu dem Fluidantrieb auch noch ein elektrischer Linearmotor zu integrieren ist. Zudem verwendet diese Lösung nach wie vor einen Fluidantrieb und damit eine sehr teure Energieform.

Die EP 1 484 160 zeigt eine Antriebseinrichtung, die ebenfalls als ein Linearmotor ausgebildet ist. Die Einrichtung ist mit einem Regler verbunden, der eine Stellgrösse für den Linearmotor in Abhängigkeit von einem Vergleich zwischen einem Sollwertverlauf und einem messtechnisch erfassten Istwert für eine jeweilige Positionierung der Reckstange vorgibt. Der Sollwertverlauf ist dabei im Bereich eines Sollwertspeichers abgelegt. Durch die Ausbildung der Antriebseinrichtung als Linearmotor sollen geringe räumliche Abmessungen eine hohe mechanische Belastbarkeit bereitstellt und zur Erzeugung genau dosierbarer grosser Kräfte verwendet werden. Durch den Regelkreis und die unmittelbare messtechnische Auswertung einer aktuellen tatsächlichen Positionierung der Reckstange soll ein vorgegebenes Bewegungsprofil exakt eingehalten werden, da der Linearmotor mit einer hohen Dynamik und somit nur geringen zeitlichen Verzögerungen geregelt werden kann. Hier besteht der Nachteil aber darin, dass nur ein entsprechend dimensionierter, grosser und schwerer und damit sehr teurer Linearmotor die Kräfte aufzubringen vermag, die üblicherweise von einem Fluidantrieb bereit gestellt werden.

Der Stand der Technik betrifft damit durchweg Rotationsmaschinen, die alle mechanisch und/oder pneumatisch aufgebaut sind. Die mit elektrischen Antrieben versehenen Maschinen weisen trotz aller erhofften Vorteile Mängel auf und wurden in der Folge auch nie umgesetzt. So ist ein Servomotor mit Spindel bzw. Riemen aufwendig und teuer und zeigt erheblichen Verschleiss. Ein Linearmotor wie in EP 1 484 160 wiederum ist flach, allerdings auch teuer und benötigt weitere Bauteile wie Linearführungen etc. Ein Linearmotor wie in WO 2006/108380 wird lediglich zur Regelung des Weges verwendet und bringt die erforderliche Kraft nicht auf. Er wird daher pneumatisch/hydraulisch unterstützt, wodurch alle Nachteile von Zylindern wieder auftauchen, wie hoher Luftverbrauch, Zylinderverschleiss usw.

Es ist Aufgabe der vorliegenden Erfindung, die Nachteile des Stands der Technik zu überwinden und eine Vorrichtung zum Blasformen eines Behälters aus einem Vorformling zur Verfügung zu stellen, die kompakt aufgebaut und leicht sowie kostengünstig herstellbar ist.

Diese Aufgabe wird durch eine Vorrichtung mit den Merkmalen des Anspruchs 1 gelöst.

Danach wird eine Verbindung zwischen dem Blaszylinderund einem tubularen elektrischen Linearmotor geschaffen, dessen Läufer mit der Reckstange verbunden ist und dessen Stator sich gegen den Blaszylinder abstützt. Der Blaszylinder stellt dabei diejenige Komponente dar, die durch Ausführen eines Hubs, der bislang pneumatisch erzeugt wird, an die Flasche andockt und durch den sowohl Blasluft als auch die Reckstange in die Flasche eingeführt werden. Der tubulare elektrische Motor vereint alle Vorteile des Stands der Technik, da er die ausreichende Kraft aufbringt, kostengünstig und verschleissarm ist. Grundsätzlich können derartige Motoren sowohl nach dem Lorenzkraftprinzip wie auch nach dem Maxwellkraftprinzip aufgebaut werden. Der Unterschied zu den flachen oder U-förmigen Linearmotoren besteht dabei darin, dass die Erregerwicklung des Stators die Magnete im stabförmigen Läufer kreisförmig (tubular) umfasst.

In der modernen Servomotortechnik hat sich die Verwendung von Seltenerden-Magneten für die Erzeugung des Flusses allgemein durchgesetzt. Bei einem tubularen elektrischen Linearmotor befinden sich die Permanentmagnete, meist Neodymmagnete, seltene Erde Magnete o.A., in einem nichtmagnetischen Stahlrohr. Die einzelnen Magnete wie Scheiben- oder Ringmagnete werden gegenpolig in dieses Präzisionsstahlrohr eingefügt, so dass auf der Aussenseite des Stahlrohres eine N-S-N-S Feldverteilung entsteht. Der Stator besteht aus einem Eisenrohr, das als Rückschluss für den magnetischen Fluss dient. Innerhalb des Eisenrohres befinden sich die Wicklungen, die typischerweise als Zwei- oder Dreiphasenwicklungen ausgeführt werden. Die Wicklungen selber werden auf einen Wicklungsträger aufgebracht, der zugleich die Funktion eines Gleitlagers besitzt. Damit kann in vielen Fällen auf eine zusätzliche Führung verzichtet werden, oder es entfällt zumindest die aufwendige Ausrichtung zwischen Läufer und Stator. Da die magnetischen Anziehungskräfte zwischen Läufer und Stator bzw. dem Eisenrückschluss sich radial kompensieren, entsteht gegenüber den flachen oder U-förmigen Linearmotoren zudem eine sehr viel geringere Lagerbelastung. Gegenüber einer einfachen Lagerung des Läufers an beiden Enden des Stators besitzt die integrierte Lagerung über die ganze Länge des Stators den Vorteil, dass der Läufer kürzer gewählt werden kann und die Belastung des Gleitlagers aufgrund der grossen Auflagefläche bedeutend geringer ist, so dass daraus eine entsprechend längere Lebensdauer resultiert. Moderne industrielle Linearmotoren dieses Typs können je nach Anwendung bis zu mehrere Milliarden Hübe ausführen. In der Mitte des Stators befinden sich sogenannte Hall-Effekt-Sensoren, welche die magnetischen Feldlinien der Magnete im Läufer erfassen. Mit einer sogenannten Sinus-Cosinus-Auswertung lässt sich aufgrund dieser Felderfassung die relative Position zwischen Läufer und Stator bestimmen. Eine zusätzliche externe Sensorik in Form eines Glasmassstabes oder eines Magnetbandes wird nur dann benötigt, wenn extreme Genauigkeitsanforderungen unterhalb von ca. 0,05 mm gefordert werden.

Neben den Wicklungen und den Positionssensoren befindet sich bei modernen tubularen elektrischen Linearmotoren ein Mikrocontroller im Stator. Dieser dient zur seriellen Kommunikation mit der Ansteuerelektronik, so dass im Betrieb weitere relevante Daten wie etwa die Temperatur in verschiedenen Bereichen des Stators, Motortyp, Seriennummern oder allgemeine Informationen, die zu einem Condition-Monitoring gehören, ausgetauscht werden können. Angesteuert werden Linearmotoren z.B. durch Controller mit PWM-Modulation und Positionsregelkreisen, wie sie von rotativen Servomotoren her bekannt sind. Allerdings bedingt die spezielle Topologie von Linearmotoren einige zusätzliche Funktionen auf dem Controller, sofern ein Optimum an Leistung erzielt werden soll. Derartige Controller für Linearmotoren werden typischerweise mittels Feldbus-Schnittstellen wie Profibus, DeviceNet, CanOpen oder ETHERNET an die übergeordnete Steuerung (SPS, PC) angeschlossen. Aufgrund ihres einfachen und robusten Aufbaus sind tubulare elektrische Linearmotoren prädestiniert für den Einsatz in der rauen industriellen Umgebung.

Konstruktiv gesehen entsteht so ein Antriebselement, das Ähnlichkeiten mit einem pneumatischen oder hydraulischen Zylinder aufweist. Insbesondere ist dessen Kraftentwicklung vergleichbar, da alle Kräfte in Wirkrichtung ausgerichtet sind und keine seitlichen Kräfte entstehen. Im Vergleich zu einem pneumatischen oder hydraulischen Zylinder lässt sich ein solches Antriebselement aber deutlich genauer, dynamischer und flexibler positionieren und weist zudem erheblich reduzierte Abmessungen bei zudem geringerem Gewicht auf. Darüber hinaus arbeitet es schneller als rotative Servoantriebe, die ihre translatorische Bewegung über einen Spindelantrieb erzeugen. Im Vergleich zu einer pneumatischen oder hydraulischen Lösung wird auch kein Ansteuerdruck mehr benötigt, der üblicherweise mit hohen Energiekosten verbunden ist. Im Vergleich dazu liegt der elektrische Energieverbrauch unter der Hälfte dieser Kosten. Da auch keine Verschleissteile mehr vorhanden sind, kann ein solches Antriebselement besonders kostengünstig betrieben werden. Dessen Anschaffungskosten können sich bereits nach einem Betriebsjahr durch Einsparungen im Energieverbrauch amortisieren.

Zudem wird ein besonders einfacher Aufbau einer Blasvorrichtung möglich, da im Vergleich zur pneumatischen oder hydraulischen Lösung weniger und billigere Bauteile und insbesondere keine Linearführung mehr benötigt werden. Zudem wird die Bauhöhe und damit das Gewicht einer solchen Vorrichtung erheblich reduziert. Da die Endposition, Geschwindigkeit usw. über den Controller gesteuert werden können, ist eine solche Vorrichtung auch äusserst flexibel. Falls z.B. unterschiedliche Flaschenformen oder -grössen verwendet werden, muss nicht mehr eine ganze Kulisse ausgetauscht oder modifiziert werden, vor allem wenn die Hubhöhe der Reckstange verändert werden muss. Da keine Kulisse mehr vorhanden ist, sind auch unterschiedliche Geschwindigkeiten möglich, ohne dass ein vorheriger Umbau von mechanischen Komponenten wie der Kulisse vorgenommen werden müsste. Auch bei prozessbedingt langsamer laufendem Blasrad kann somit ein gleichbleibend schneller Reckstangenvorschub beibehalten werden. Dadurch kann die Maschine einen variablen Ausstoss von Flaschen liefern. Da die Blasvorrichtung auch keinen massiven Aufbau mehr erfordert, sind rotierende Blasvorrichtungen keinem starken Verschleiss mehr ausgesetzt, was deren Lebensdauer erheblich verlängert. Die Hauptvorteile der Massenreduktion liegen allerdings in einer besseren Dynamik, einem geringeren Energieaufwand durch reduzierte bewegte Massen, in Kostenvorteilen, da weniger Material verbaut ist, und darin, dass eine kompaktere Maschine selbst möglich ist; gleichzeitig ist deren Herstellung bei neuerdings hohem Stahlpreis günstiger.

Bevorzugte Weiterbildungen der vorliegenden Erfindung sind in den Unteransprüchen angegeben.

Ein besonders einfacher Aufbau einer Blasvorrichtung ergibt sich dann, wenn ein Blaskolben vorgesehen ist, der die Reckstange umgreift, und an dessen einem Ende die Blasdüse angeordnet ist und dessen anderes Ende axial verschiebbar in dem Blaszylinder gelagert ist. Dabei kann der Kolben durch den Zylinder hindurch mit Druckluft beaufschlagt werden, um aus diesem heraus bewegt zu werden. In eingefahrenem Zustand des Kolbens kann der Vorformling damit besonders einfach in die Blasdüse aufgenommen werden. In ausgefahrenem Zustand wird die Blasdüse dichtend gegen die Hohlform gedrückt, in welcher der Vorformling schliesslich zu einem Behälter geblasen wird. Zur Beladung der Blasvorrichtung ist es damit nicht erforderlich, diese in Gänze zu verfahren, was deren Lagerung und Kinematik deutlich vereinfacht und deren Höhenbedarf reduziert.

Eine noch kompaktere Bauform der Vorrichtung wird dadurch erzielt, dass der Blaszylinder und der Läufer des Motors so geformt und dimensioniert sind, dass der Läufer wenigstens teilweise in den Blaszylinder hinein verfahrbar ist. Damit ist eine weitere Reduktion der Bauhöhe und des Gewichts der bereits vorstehend beschriebenen Vorrichtung möglich, was die dort genannten Vorteile noch einmal verstärkt. Eine besonders kompakte und dennoch sehr einfache Bauform wird erzielt, wenn der Läufer so tief wie möglich, d.h. bis kurz vor den Vorformling bzw. die Flaschenform in den Blaszylinder eintaucht. Eine optimale Verkürzung der Bauhöhe einer solchen Vorrichtung wird insbesondere dann erreicht, wenn eine Hubhöhe des Läufers vollständig innerhalb einer Bauhöhe des Blaszylinders liegt, d.h. dessen blasdüsenseitiges Ende sich nicht aus dem Blaszylinder heraus bewegt. Eine derartige Integration von Motor und Zylinder macht einen besonders kompakten und längenverkürzten Aufbau der Blasvorrichtung möglich.

Die Verbindung zwischen Läufer und Reckstange kann dabei je nach Anforderung der spezifischen Anwendung (Rotationsblasmaschine, Linearblasmaschine usw.) unterschiedlich gewählt sein. Eine besonders stabile Verbindung wird z.B. bereitgestellt, wenn der Läufer und die Reckstange einstückig ausgeführt sind. Eine leicht wechselbare und zudem stabil mit dem Läufer verbundene Reckstange kann dagegen durch Verschraubung des Läufers mit der Reckstange bereitgestellt werden. Dazu kann der Läufer z.B. eine axiale Gewindebohrung und die Reckstange ein entsprechendes Aussengewinde aufweisen. Eine besonders schnelle Wechselbarkeit der Reckstange kann schliesslich ermöglicht werden, indem der Läufer und die Reckstange lediglich in axialer Richtung miteinander gekoppelt sind, so dass sich die Reckstange z.B. in radialer Richtung oder Umfangsrichtung "aushaken" lässt. Dabei können Kupplungen wie ein Bajonettverschluss, eine T-Nuten-Einführung oder eine Kupplung mit Axial- und Winkelausgleich zwischen Läufer und Reckstange verbaut werden, welche einen besonders schnellen Wechsel der Reckstange ermöglichen.

Die vorstehende Aufgabe wird auch durch eine Vorrichtung mit den Merkmalen des Anspruchs 8 gelöst. Dieser sieht eine alternative Anordnung des tubularen elektrischen Linearmotors in einem Abstand parallel zum Blaszylinder vor. Im Sinne einer kinematischen Umkehr wird dabei nicht mehr der Läufer des Motors bewegt, sondern dessen Stator, der wiederum über einen Ausleger mit der Reckstange verbunden ist. Diese Kopplung kann ähnlich wie bereits beschrieben erfolgen, also einstückig, verschraubt oder in axiale Richtung ausgeführt sein. Die parallele Anordnung des Motors hat insbesondere den Vorteil, dass die Bauhöhe gegenüber den vorstehenden Ausführungsformen reduziert ist, da keine Läuferstange nach oben herausfährt und die Zugänglichkeit für den Austausch der Reckstange vereinfacht ist. Zudem lässt sich der Motor besonders einfach und wirkungsvoll kühlen, so dass eine Leistungssteigerung um bis zu 30 % erzielt werden kann.

Eine nochmals kompaktere Bauform der Vorrichtung wird dadurch erzielt, dass der Läufer als Teil der Reckstange ausgebildet ist. Die Reckstange kann z.B. direkt mit Magneten befüllt werden und als Läufer in dem Motor fungieren. Dies ist insbesondere dann von Vorteil, wenn zukünftig die magnetische Kraft tubularer elektrischer Linearmotoren weiter gesteigert wird, und sich gleichzeitig die tatsächlich benötigte Prozesskraft beim Recken von Behältern durch verbesserte Materialien oder z.B. dünnwandige Flaschen reduziert, oder sich z.B. Flaschenöffnungen und damit Reckstangendurchmesser vergrössern.

Eine noch weiter komprimierte Bauform wird schliesslich dadurch erreicht, indem der Stator des Motors wenigstens teilweise von dem Blaszylinder umschlossen oder als integraler Bestandteil des Blaszylinders ausgeführt ist, d.h. im optimalen Fall der Stator vollständig in den Zylinder integriert ist. Um den Blaszylinder selbst dadurch nicht zu verlängern, ist es bevorzugt vorgesehen, dass der Stator des Motors wenigstens teilweise von dem Blaskolben umschlossen ist oder als integraler Bestandteil des Blaszylinders ausgeführt ist. Diese Lösung ist insbesondere für Körper mit einer grösseren Öffnung als einem Flaschenhals von Vorteil. Für Gefässe mit dünnerem Flaschenhals ist dagegen denkbar, dass die Prozesskräfte durch immer dünnwandigere Gefässe sinken. Die möglichen Kräfte der Linearantriebe können dabei durch stärkere Permanent- und Elektromagnete gesteigert werden. Eine grössere Wärmebildung kann durch entsprechende Luft- und/oder Wasserkühlung des Stators aufgefangen werden.

Es ist von Vorteil, wenn der Läufer des Motors als Hohlmagnetstange ausgeführt ist, durch die kühlende Blasluft geführt ist. Dadurch wird der Motor über den Läufer zusätzlich gekühlt, wobei es auch möglich ist, diesen Luftstrom generell zur Motorkühlung zu nutzen. Wenn auch die Reckstange als Hohlstange ausgeführt ist, und die Blasluft durch den Läufer und die Reckstange geführt ist, kann diese auch zur Kühlung der Blasform verwendet werden. Dabei braucht z.B. das PET im Formwerkzeug nicht so stark gekühlt werden. Statt dessen wird über die Reckstange von innen kühlende Blasluft zugeführt. Insbesondere dann, wenn der Läufer z.B. als integraler Teil der Reckstange ausgeführt ist, entsteht damit eine besonders einfache Luftführung zur Kühlung eines blasgeformten Behälters. Die Blasluft kann dabei über einen Schlauchanschluss zugeführt werden, der direkt oben auf dem Läufer des Motors angeflanscht ist, von dort in die Reckstange hinein und an deren unterem Ende in die Blasform hinaus geleitet und schliesslich über die Blasdüse hinweg abgeführt werden. Neben einem koaxialen Austritt der Blasluft am unteren Ende der hohlen Reckstange kann auch vorgesehen sein, dass diese mit radialen Austrittsöffnungen versehen ist, über welche die Blasluft in die Blasform geleitet wird.

Zusätzlich ist wenigstens ein Zuluftstrompfad und/oder wenigstens ein Abluftstrompfad für Druckluft zu bzw. von der Blasdüse vorgesehen, wobei wenigstens einer der Pfade durch den Stator und/oder am Stator des Motors vorbei geführt ist. Dabei wird möglichst nahe bei den Spulen eine Wärmeabfuhr erzielt, was die Dauerleistung des Motors erheblich erhöht. Diese Kühlwirkung kann noch dadurch erhöht werden, indem wenigstens ein Strompfad zur Wasserzufuhr vorgesehen ist, der durch den Stator und/oder am Stator des Motors vorbei geführt ist.

Die Abluft beim Blasen von Behältern kann dabei z.B. vor einem Schalldämpfer mit einem Druckniveau von ca. 6 bar abgezweigt und über ein Rückschlagventil in einen Puffer, d.h. in einen kleinen Drucklufttank, geführt werden, von wo aus die Abluft gedrosselt am Motor vorbei und/oder über dessen Stator geführt werden kann. Nebst dem Vorteil der Motorkühlung wird dadurch eine minimal schnellere Entlüftung erreicht.

Ein weiterer Vorteil entsteht, wenn wenigstens ein Zuluftstrompfad und wenigstens ein Abluftstrompfad für Druckluft zu bzw. von der Düse vorgesehen ist, wobei wenigstens einer der Pfade so über den Motor geführt ist, dass dieser luftgekühlt wird. Alternativ oder zusätzlich kann aber auch ein Strompfad zur Wasserzufuhr vorgesehen sein, der so über den Motor geführt ist, dass dieser wassergekühlt wird. In einer besonders einfachen alternativen oder zusätzlichen Lösung können auch Kühlrippen zum Luftkühlen des Motors vorgesehen sein.

Durch die vorstehend beschriebene Kühlung des Stators, also des Spulenträgers Motors, kann dessen Leistung derart gesteigert werden, dass bereits ein herkömmlicher, kompakter tubularer elektrischer Linearmotor als alleiniger Antrieb der Blasvorrichtung ausreichend ist. Die Kühlung geschieht dabei vorteilhafterweise mit Medien, die sowieso auf der Maschine vorhanden sind. Insbesondere kann die Kühlluft als Abfallprodukt beim Entlüften der Flasche nebst der normalen Arbeitsluft in der Maschine zum Kühlen verwendet werden. Üblicherweise ist auch Kühlwasser vorhanden, da die Flaschenform gekühlt werden muss.

Um die Belastung durch den wirkenden Blasdruck auf die Reckstange nicht durch Motorkraft kompensieren zu müssen, ist bevorzugt ein Anschlag vorgesehen, gegen den der Läufer in einer oberen Ruhelage anliegt. Eine Dauerbelastung des Motors kann dadurch verringert werden, indem ein elastisch federndes Rückstellelement vorgesehen ist, welches das Eigengewicht bewegter Teile, insbesondere der Reckstange und/oder des Läufers kompensiert.

Um sicherzustellen, dass im erfindungsgemässen Linearmotorkonzept die Reckstange mechanisch gesichert nach oben geführt wird, ist es von Vorteil, wenn die Rückstellung der Reckstange durch einen kurzen, temporären Druckluftstoss unterstützt wird. Dadurch kann z.B. eine Kollision auf dem Blasrad verhindert werden, wenn die fertige Flasche entnommen werden soll, die Reckstange aber steckengeblieben ist. Im einfachsten Fall kann diese Druckluft aus der Blasabluft stammen, sie kann aber auch gezielt von der Maschinenarbeitsluft von ca. 7 bar entnommen werden.

Eine hohe Dauerbelastung des tubularen elektrischen Linearmotors kann dabei dadurch vermieden werden, indem die Reckstange nach Abschluss des Blasformungsvorgangs möglichst früh zurückgezogen wird. Obwohl der Blasvorgang selbst ca. 1,6 Sekunden lang dauert, könnte die Reckstange bereit kurz nach Erreichen ihrer Endposition wieder zurückgefahren werden. Zum Halten der Stange gegen die Kraft welche durch den in der Flasche wirkenden Druck entsteht, kann dabei der schon erwähnte Anschlag dienen, gegen den die Stange dann in der oberen Ruhelage anliegt. Dies verringert die Standkraftbelastung des Motors, die bei ausgefahrener Reckstange gegen den Blasdruck aufzubringen ist.

In jedem Fall soll aber ein tubularer elektrischer Linearmotor bevorzugt zum alleinigen Antreiben der Reckstange in einer Vorrichtung zum Blasformen von Behältern aus einem Vorformling verwendet werden.

Die Erfindung wird im Folgenden unter Bezugnahme auf die beigelegten Figuren näher erläutert. Gleiche oder gleichwirkende Teile sind mit gleichen Bezugsziffern versehen. Es zeigen:
- Figur 1: eine erste kompakte Ausführungsform einer erfin- dungsgemässen Vorrichtung zum Blasformen von Be- hältern aus Vorformlingen;
- Figur 2: eine zweite, noch kompaktere Ausführungsform einer erfindungsgemässen Vorrichtung;
- Figur 3: eine dritte, alternative Ausführungsform einer er- findungsgemässen Vorrichtung nach Figur 1 bzw. 2;
- Figur 4: eine vierte, nochmals kompaktere Ausführungsform einer erfindungsgemässen Vorrichtung, und
- Figur 5: eine fünfte, noch weiter komprimierte Ausführungs- form einer erfindungsgemässen Vorrichtung.

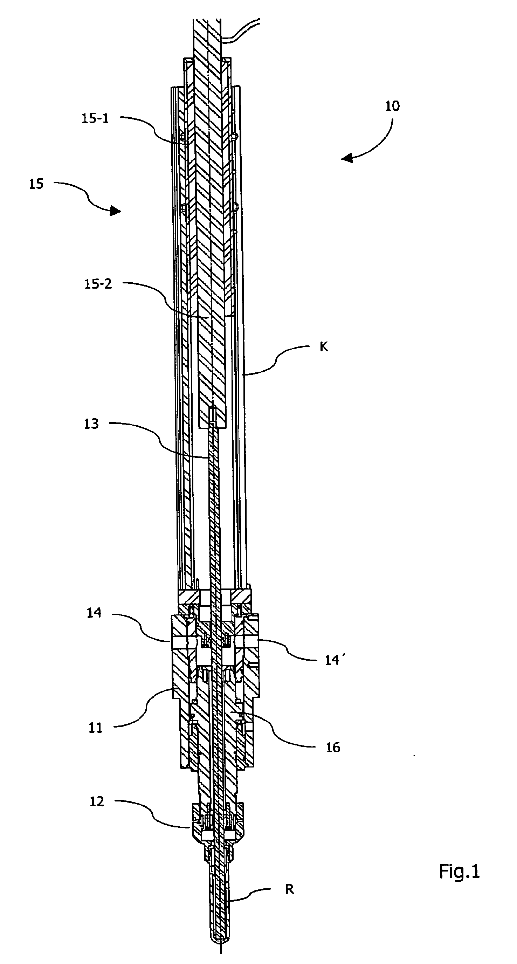

Die Figur 1 zeigt eine erste kompakte Ausführungsform 10 einer erfindungsgemässen Vorrichtung zum Blasformen von Behältern aus Vorformlingen R. Diese besteht aus einem Blaszylinder 11 und einer daran gehaltenen Blasdüse 12, an welcher der Vorformling R aufgenommen ist. Eine Reckstange 13 ist durch die Düse 12 hindurch in den Vorformling R hinein und wieder heraus verfahrbar und wird von dem Zylinder 14 umgriffen. Der Düse 12 wird über Öffnungen 14, 14' in dem Zylinder 11 Druckluft zugeführt, um denVorformling R gleichzeitig oder zeitversetzt zum Reckvorgang gegen eine Hohlform (nicht dargestellt) aufzublasen. Die Reckstange 13 wird über eine tubularen elektrischen Linearmotor 15 angetrieben, dessen Läufer 15-2 mit der Reckstange 13 verschraubtist. Alternative Verbindungen können aber auch einen Schnellverschluss oder eine Kupplung vorsehen. Dadurch ist ein schneller Wechsel der Reckstange 13 abhängig von der Behälterproduktion möglich. Der Stator 15-1 des Motors 15 ist in einem Gehäuse untergebracht, das mit Kühlrippen K versehen ist. Alternativ oder zusätzlich kann auch eine Wasserkühlung vorgesehen sein, die wie die Kühlrippen K zu einer erheblichen Leistungssteigerung des Motors 15 beiträgt. Zum raschen und einfachen Einbringen desVorformlings R ist die Vorrichtung 10 mit einem Blaskolben 16 versehen, dessen eines Ende axial beweglich in dem Zylinder 11 aufgenommen ist, und dessen anderes Ende die Düse 12 trägt. Der Kolben 16 wird dabei vor dem eigentlichen Blasvorgang luftdicht gegen die Hohlform zur Anlage gebracht.

Im Vergleich zu einer konventionellen pneumatischen oder hydraulischen Blasvorrichtung mit entsprechend grossen und schweren Zylindern ist durch den tubularen elektrischen Linearmotor die Bauhöhe der erfindungsgemässen Vorrichtung 10 deutlich verkürzt. Da der Aufbau weniger und einfachere Bauteile und insbesondere keine Linearführung mehr erfordert, sind die Herstellungskosten zudem erheblich geringer. Gleichzeitig wird das Gewicht wesentlich reduziert, was insbesondere in einer Blasmaschine mit Blasstationen, die auf einem Laufrad rotieren, geringere Massenträgheitskräfte erzeugt. Dadurch wiederum verringert sich der Verschleiss der Anlage und somit deren Betriebskosten. Während z.B. ein Pneumatiksystem nur lediglich ein Jahr hält, ist ein Reckantrieb mit einem tubularen elektrischen Linearmotor praktisch verschleissfrei. Das gewichtsreduzierte System lässt zudem den Energiebedarf sinken, was zu einer weiteren Verringerung der Betriebskosten beiträgt.

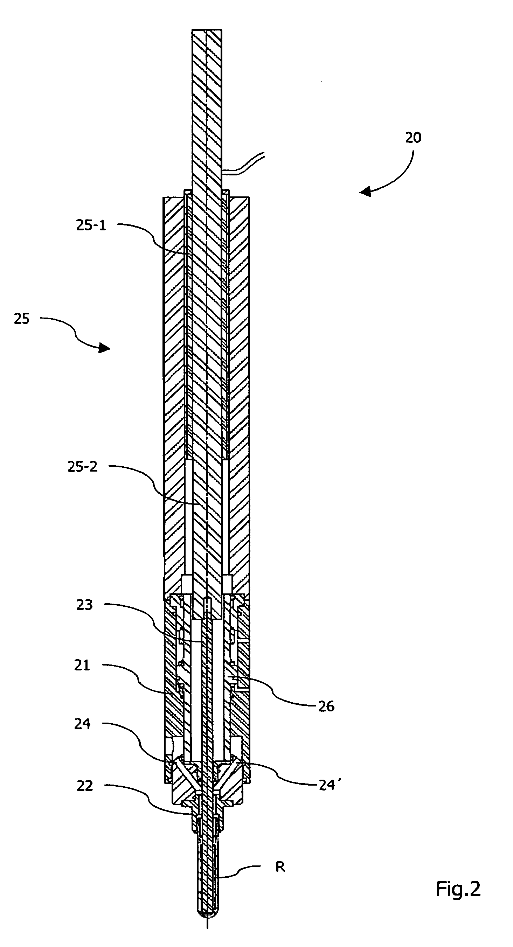

Die Figur 2 zeigt eine zweite, noch kompaktere Ausführungsform 20 einer erfindungsgemässen Vorrichtung. Im Unterschied zur Vorrichtung 10 der Figur 1 ist sowohl ein Blaszylinder 21 wie auch ein darin gelagerter Blaskolben 26 so auf einen Läufer 25-2 eines tubularen elektrischen Linearmotors 25 angepasst, dass dieser Läufer in einer Hubbewegung (von ungefähr 400 mm) bis kurz vor den Vorformling R in den Zylinder 21 eingefahren werden kann. Der Kolben 26 weist dazu im Bereich eines freien Endes Öffnungen 24, 24' auf, die schräg auf eine an diesem Ende gehaltene Düse 22 zulaufen, und denen über entsprechende Öffnungen im Zylinder 21 Druckluft zugeführt wird. Im Vergleich zur Vorrichtung 10 erlaubt diese Konstruktion eine weitere Verkürzung der Vorrichtung 20, und verstärkt die dort bereits genannten Vorteile. Eine Reckstange 23 ist dabei wie in Figur 1 bereits beschrieben mit dem Läufer 25-2 des Motors 25 verschraubt, um einen schnellen Wechsel abhängig von der Behälterproduktion zu gewährleisten. Abhängig von der Hubhöhe der Reckstange 23 ist ein Stator 25-1 des Motors 25 so nahe wie möglich am Zylinder positioniert, um ein Optimum an Verkürzung zu erhalten. Eine besonders kurze Bauform der Vorrichtung 20 wird erreicht, wenn die Hubhöhe der Reckstange 23 vollständig innerhalb des Zylinders 21 liegt.

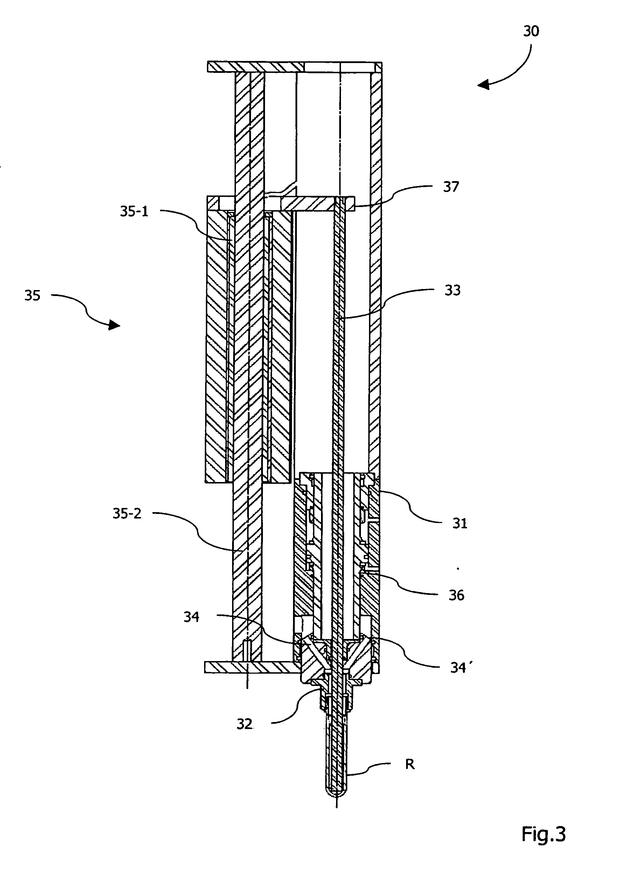

Die Figur 3 zeigt eine dritte, zu den Figuren 1 bzw. 2 alternative Ausführungsform 30 einer erfindungsgemässen Vorrichtung. Abweichend von den genannten Figuren ist dabei ein tubularer elektrischer Linearmotor 35 in einem Abstand parallel zu einem Blaszylinder 31 angeordnet. In diesem Beispiel bewegt sich der Motor 35 entlang eines Läufers 35-2, und nimmt über einen Stator 35-1 eine Reckstange 33 mit, die mit diesem über einen Ausleger 37 verbunden ist. Dabei können der Zylinder 31, ein darin gelagerter Blaskolben 36 mit Öffnungen 34, 34' und eine an dessen freiem Ende gehaltene Blasdüse 32 wie in Figur 2 oder Figur 1 gestaltet sein. Auch die alternative Anordnung des Motors 35 in der gezeigten Art und Weise verkürzt den Aufbau der Vorrichtung 30 erheblich, mit den bereits genannten Vorteilen.

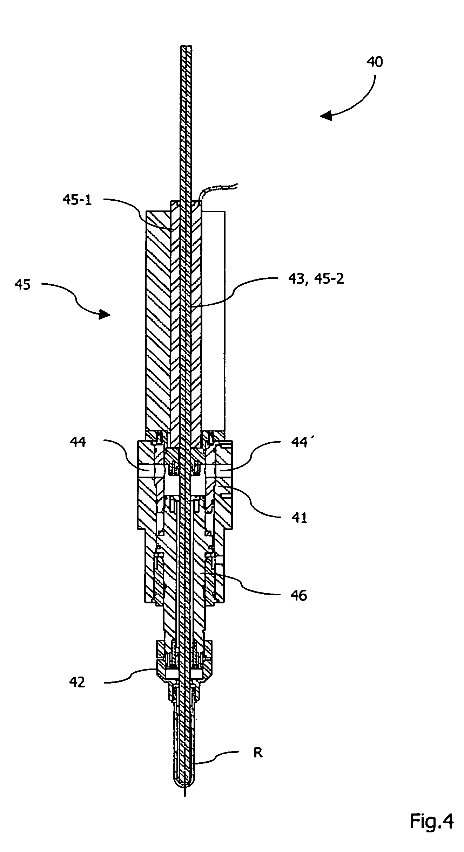

Die Figur 4 zeigt eine vierte, nochmals kompaktere Ausführungsform 40 einer erfindungsgemässen Vorrichtung. Eine weitere Verkürzung deren Aufbaus wird dadurch erzielt, dass der Läufer 45-2 eines tubularen elektrischen Linearmotors 45 als ein Teil einer Reckstange 43 ausgebildet ist. Dadurch entfällt eine konstruktive Anpassung des gesamten Kopfes der Vorrichtung wie in Figuren 2 und 3. Ein Blaszylinder 41 inklusive Öffnungen 44, 44', ein Blaskolben 46 und eine Blasdüse 42 können unverändert aus der Vorrichtung der Figur 1 entnommen werden. Der Motor 45 samt Stator 45-1 kann somit direkt oberhalb des Zylinders 41 angeordnet werden, da die Bewegung seines Läufers 45-2, also hier der Reckstange 43, nicht durch die maximale Tiefe des Zylinders 41 begrenzt ist.

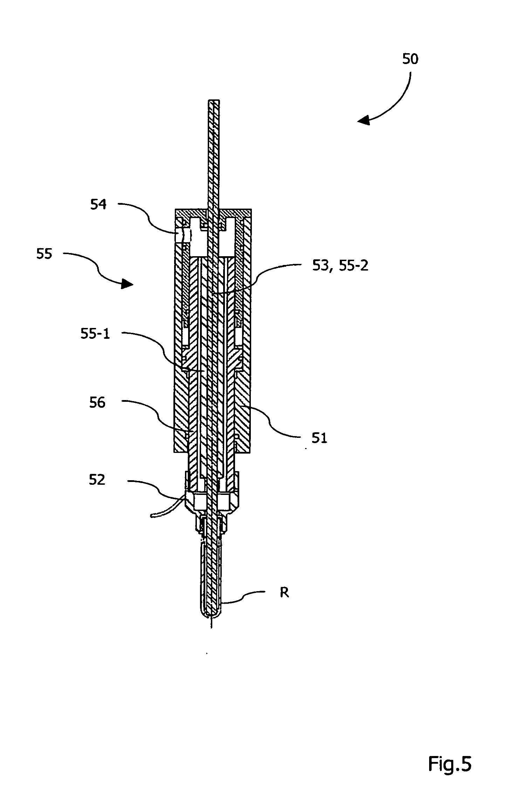

Die Figur 5 schliesslich zeigt eine fünfte, noch weiter komprimierte Ausführungsform 50 einer erfindungsgemässen Vorrichtung. Wie bereits in Figur 4 gezeigt ist der Läufer 55-2 eines tubularen elektrischen Linearmotors 55 als Teil einer Reckstange 53 ausgebildet, wodurch eine erste Reduktion der Bauhöhe erzielt wird. Zusätzlich ist aber auch der Stator 55-1 des Motors 55 vollständig in einen Blaszylinder 51 integriert, der zusammen mit einem darin gelagerten Blaskolben 56 entsprechend konstruktiv angepasst ist. Der Stator 55-1 ist dabei zugleich in den Kolben 56 eingebaut und wird von diesem mitbewegt. Alternativ dazu ist es natürlich auch möglich, dass der Motor 55 in ähnlicher Einbauposition vom Gehäuse gehalten wird und sich der Kolben 56 unabhängig davon bewegt. Eine am freien Ende des Kolbens 56 gehaltene Blasdüse 52 wird über ein Öffnung 54 in dem Zylinder 51 mit Druckluft versorgt.

Eine derartige Integration des Antriebs in die Blasvorrichtung stellt dabei die kompaktest mögliche Bauform dar. Deren einfacher und gewichtsoptimierter Aufbau macht sowohl niedrige Herstellungs- wie auch Betriebskosten möglich, da deutlich reduzierte Energiekosten und praktisch keine Wartungskosten anfallen. Die Verwendung eines tubularen elektrischen Linearmotors als Antriebselement garantiert darüber hinaus eine hohe Positioniergenauigkeit bei gleichzeitig erhöhter Flexibilität, sowohl hinsichtlich unterschiedlicher Einfahrlängen der Reckstange als auch deren Bewegungsgeschwindigkeit.

## Patentansprüche

1. Vorrichtung (10) zum Blasformen eines Behälters aus einem Vorformling, mit einem Blaszylinder (11) und einer daran gehaltenen Blasdüse (12), in welcher der Vorformling (R) fixiert werden kann, und mit einer Reckstange (13), welche von dem Zylinder (11) umgriffen wird und welche durch die Düse (12) hindurch verfahrbar ist, wobei die Düse (12) über Öffnungen (14) in dem Zylinder (11) mit Druckluft versorgt werden kann, **dadurch gekennzeichnet, dass** die Reckstange (13) von einem einzigen tubularen elektrischen Linearmotor (15) angetrieben ist, dessen Stator (15-1) an dem Zylinder (11) gehalten und dessen Läufer (15-2) mit der Reckstange (13) verbunden ist, und wenigstens ein Zuluftstrompfad und/oder wenigstens ein Abluftstrompfad für Druckluft zu bzw. von der Blasdüse (12; 22; 32; 42; 52) vorgesehen ist, wobei wenigstens einer der Pfade durch den Stator und/oder am Stator (15-1; 25-1; 35-1; 45-1; 55-1) des Motors (15; 25; 35; 45; 55) vorbei geführt ist.

2. Vorrichtung nach Anspruch 1, mit einem Blaskolben (16), der die Reckstange (13) umgreift, und an dessen einem Ende die Blasdüse (12) angeordnet ist und dessen anderes Ende axial verschiebbar in dem Blaszylinder (11) gelagert ist, wobei der Kolben (16) durch den Zylinder (11) hindurch mit Druckluft beaufschlagt werden kann, um aus diesem heraus bewegt zu werden.

3. Vorrichtung (20) nach Anspruch 1 oder 2, bei welcher der Blaszylinder (21) und der Läufer (25-2) des Motors (25) so geformt und dimensioniert sind, dass der Läufer (25-2) wenigstens teilweise in den Blaszylinder (21) hinein verfahrbar ist.

4. Vorrichtung (20) nach einem der Ansprüche 1 bis 3, bei welcher eine Hubhöhe des Läufers (25-2) vollständig innerhalb einer Bauhöhe des Blaszylinders (21) liegt.

5. Vorrichtung (10; 20) nach einem der Ansprüche 1 bis 4, bei welcher der Läufer (15-2; 25-2) und die Reckstange (13; 23) einstückig ausgeführt sind.

6. Vorrichtung nach einem der Ansprüche 1 bis 4, bei welcher der Läufer (15-2; 25-2) und die Reckstange (13; 23) miteinander verschraubt sind.

7. Vorrichtung nach einem der Ansprüche 1 bis 4, bei welcher der Läufer (15-2; 25-2) und die Reckstange (13; 23) lediglich in axialer Richtung miteinander gekoppelt sind

8. Vorrichtung (40) nach einem der Ansprüche 1 bis 7, bei welcher der Läufer (45-2) als Teil der Reckstange (43) ausgebildet ist.

9. Vorrichtung (50) nach Anspruch 8, bei welcher der Stator (45-1) des Motors (45) wenigstens teilweise von dem Blaszylinder (51) umschlossen oder als integraler Bestandteil des Blaszylinders (51) ausgeführt ist.

10. Vorrichtung (50) nach Anspruch 8 oder 9, bei welcher der Stator (55-1) des Motors (55) wenigstens teilweise von dem Blaskolben (56) umschlossen oder als integraler Bestandteil des Blaskolbens (56) ausgeführt ist.

11. Vorrichtung (30) zum Blasformen eines Behälters aus einem Vorformling, mit einem Blaszylinder (31) und einer daran gehaltenen Blasdüse (32), in welcher ein Vorformling (R) fixiert werden kann, und mit einer Reckstange (33), welche in dem Zylinder (31) gelagert und durch die Düse (32) hindurch verfahrbar ist, wobei die Düse (32) durch den Zylinder (31) hindurch mit Druckluft versorgt werden kann, **dadurch gekennzeichnet, dass** die Reckstange (33) von einem tubularen elektrischen Linearmotor (35) angetrieben ist, dessen Stator (35-1) über einen Ausleger (37) mit der Reckstange (33), und dessen Läufer (35-2) in einem Abstand parallel zur Reckstange (33) angeordnet und starr mit dem Blaszylinder (31) verbunden ist, und wenigstens ein Zuluftstrompfad und/oder wenigstens ein Abluftstrompfad für Druckluft zu bzw. von der Blasdüse (12; 22; 32; 42; 52) vorgesehen ist, wobei wenigstens einer der Pfade durch den Stator und/oder am Stator (15-1; 25-1; 35-1; 45-1; 55-1) des Motors (15; 25; 35; 45; 55) vorbei geführt ist.

12. Vorrichtung (10; 20; 40; 50) nach einem der vorstehenden Ansprüche, bei welcher der Läufer (15-2; 25-2; 35-2) des Motors (15; 25; 35) als Hohlmagnetstange ausgeführt ist, durch die kühlende Blasluft geführt ist.

13. Vorrichtung (10; 20; 40; 50) nach Anspruch 12, bei welcher auch die Reckstange (13; 23; 33; 43; 53) als Hohlstange ausgeführt ist, und die kühlende Blasluft durch den Läufer (15-2; 25-2; 35-2; 45-2; 55-2) und die Reckstange (13; 23; 33; 43; 53) geführt ist.

14. Vorrichtung (10; 20; 40; 50) nach einem der vorstehenden Ansprüche, mit wenigstens einem Strompfad zur Wasserzufuhr, der durch den Stator und/oder am Stator (15-1; 25-1; 35-1; 45-1; 55-1) des Motors (15; 25; 35; 45; 55) vorbei geführt ist.

15. Vorrichtung (10; 20; 30; 40; 50) nach einem der vorstehenden Ansprüche, mit wenigstens einem Zuluftstrompfad und wenigstens einem Abluftstrompfad für Druckluft zu bzw. von der Düse (12; 22; 32; 42; 52), wobei wenigstens einer der Pfade so über den Motor (15; 25; 35; 45; 55) geführt ist, dass dieser luftgekühlt wird.

16. Vorrichtung (10; 20; 30; 40; 50) nach einem der vorstehenden Ansprüche, mit wenigstens einem Strompfad zur Wasserzufuhr, der so über den Motor (15; 25; 35; 45; 55) geführt ist, dass dieser wassergekühlt wird.

17. Vorrichtung (10; 20; 30; 40; 50) nach einem der vorstehenden Ansprüche, mit Kühlrippen (K) zum Luftkühlen des Motors (15; 25; 35; 45; 55).

18. Vorrichtung (10; 20; 30; 40; 50) nach einem der vorstehenden Ansprüche, bei der ein Anschlag vorgesehen ist, gegen den der Läufer (15-2; 25-2; 35-2; 45-2; 55-2) in einer oberen Ruhelage anliegt.

19. Vorrichtung (10; 20; 30; 40; 50) nach einem der vorstehenden Ansprüche, bei der ein elastisch federndes Rückstellelement vorgesehen ist, welches das Eigengewicht bewegter Teile, insbesondere der Reckstange (13; 23; 33; 43; 53) und/oder des Läufers (15-2; 25-2; 35-2; 45-2; 55-2) kompensiert.

20. Verfahren zum Steuern einer Vorrichtung (10) nach einem der vorstehenden Ansprüche, bei welcher eine Rückstellung der Reckstange (33) durch einen Druckluftstoss unterstützt wird.

21. Verfahren nach Anspruch 20, bei dem die Luft zum Erzeugen des Druckluftstosses aus einer Blasabluft entnommen wird.

22. Verfahren nach Anspruch 20 oder 21, bei dem die Luft zum Erzeugen des Druckluftstosses aus einer Maschinenarbeitsluft entnommen wird.

23. Verwendung eines tubularen elektrischen Linearmotors (15; 25; 35; 45; 55) zum alleinigen Antreiben der Reckstange (13; 23; 33; 43; 53) in einer Vorrichtung (10; 20; 30; 40; 50) zum Blasformen von Behältern aus einem Vorformling nach einem der Ansprüche 1 bis 19.

## Claims

1. A device (10) for blow molding a container from a preform, having a blowing cylinder (11) and a blowing nozzle (12) mounted thereon, in which the preform (R) can be fixed, and having a stretching bar (13), which is enclosed by the cylinder (11), and which is movable through the nozzle (12), the nozzle (12) being able to be supplied with compressed air via openings (14) in the cylinder (11), **characterized in that** the stretching bar (13) is driven by a single tubular electrical linear motor (15), whose stator (15-1) is mounted on the cylinder (11) and whose rotor (15-2) is connected to the stretching bar (13), and at least one supply air flow pathway and/or at least one exhaust air flow pathway for compressed air to or from the blowing nozzle (12; 22; 32; 42; 52) is provided, at least one of the pathways being guided through the stator and/or past the stator (15-1; 25-1; 35-1; 45-1; 55-1) of the motor (15; 25; 35; 45; 55).

2. The device according to Claim 1, having a blowing piston (16), which encloses the stretching bar (13), and on one end of which the blowing nozzle (12) is situated and whose other end is mounted so it is axially displaceable in the blowing cylinder (11), compressed air being able to be applied to the piston (16) through the cylinder (11) in order to move the piston out of the cylinder.

3. The device (20) according to Claim 1 or 2, wherein the blowing cylinder (21) and the rotor (25-2) of the motor (25) are shaped and dimensioned so that the rotor (25-2) is at least partially movable into the blowing cylinder (21).

4. The device (20) according to one of Claims 1 through 3, wherein a stroke height of the rotor (25-2) lies completely inside an installation height of the blowing cylinder (21).

5. The device (10; 20) according to one of Claims 1 through 4, wherein the rotor (15-2; 25-2) and the stretching bar (13; 23) are implemented in one piece.

6. The device according to one of Claims 1 through 4, wherein the rotor (15-2; 25-2) and the stretching bar (13; 23) are screwed to one another.

7. The device according to one of Claims 1 through 4, wherein the rotor (15-2; 25-2) and the stretching bar (13; 23) are only coupled to one another in the axial direction.

8. The device (40) according to one of Claims 1 through 7, wherein the rotor (45-2) is implemented as part of the stretching bar (43).

9. The device (50) according to Claim 8, wherein the stator (45-1) of the motor (45) is at least partially enclosed by the blowing cylinder (51) or is implemented as an integral component of the blowing cylinder (51).

10. The device (50) according to Claim 8 or 9, wherein the stator (55-1) of the motor (55) is at least partially enclosed by the blowing piston (56) or is implemented as an integral component of the blowing piston (56).

11. A device (30) for blow molding a container from a preform, having a blowing cylinder (31) and a blowing nozzle (32) mounted thereon, in which a preform (R) can be fixed, and having a stretching bar (33), which is mounted in the cylinder (31) and is movable through the nozzle (32), the nozzle (32) being able to be supplied with compressed air through the cylinder (31), **characterized in that** the stretching bar (33) is driven by a tubular electrical linear motor (35), whose stator (35-1) is connected via a boom (37) to the stretching bar (33), and whose rotor (35-2) is situated at a distance parallel to the stretching bar (33) and is connected rigidly to the blowing cylinder (31), and at least one supply air flow pathway and/or at least one exhaust air flow pathway is provided for compressed air to or from the blowing nozzle, at least one of the pathways being guided through the stator and/or past the stator (15-1; 25-1; 35-1; 45-1; 55-1) of the motor (15; 25; 35; 45; 55).

12. The device (10; 20; 40; 50) according to one of the preceding claims, wherein the rotor (15-2; 25-2; 35-2) of the motor (15; 25; 35) is implemented as a hollow magnetic bar, through which cooling blowing air is guided.

13. The device (10; 20; 40; 50) according to Claim 12, wherein the stretching bar (13; 23; 33; 43; 53) is also implemented as a hollow bar, and the cooling blowing air is guided through the rotor (15-2; 25-2; 35-2; 45-2; 55-2) and the stretching bar (13; 23; 33; 43; 53).

14. The device (10; 20; 40; 50) according to one of the preceding claims, having at least one flow pathway for the water supply, which is guided through the stator and/or past the stator (15-1; 25-1; 35-1; 45-1; 55-1) of the motor (15; 25; 35; 45; 55).

15. The device (10; 20; 30; 40; 50) according to one of the preceding claims, having at least one supply air flow pathway and at least one exhaust air flow pathway for compressed air to or from the nozzle (12; 22; 32; 42; 52), wherein at least one of the pathways is guided via the motor (15; 25; 35; 35; 55) so that it is air-cooled.

16. The device (10; 20; 30; 40; 50) according to one of the preceding claims, having at least one flow pathway for the water supply, which is guided via the motor (15; 25; 35; 45; 55) so that it is water-cooled.

17. The device (10; 20; 30; 40; 50) according to one of the preceding claims, having cooling ribs (K) for the air cooling of the motor (15; 25; 35; 45; 55).

18. The device (10; 20; 30; 40; 50) according to one of the preceding claims, wherein a stop is provided, against which the rotor (15-2; 25-2; 35-2; 45-2; 55-2) presses in an upper idle position.

19. The device (10; 20; 30; 40; 50) according to one of the preceding claims, wherein an elastic springy restoring element is provided, which compensates for the intrinsic weight of moving parts, in particular of the stretching bar (13; 23; 33; 43; 53) and/or the rotor (15-2; 25-2; 35-2; 45-2; 55-2).

20. A method for controlling a device (10) according to one of the preceding claims, wherein a reset of the stretching bar (33) is supported by a compressed air burst.

21. The method according to Claim 20, wherein the air for generating the compressed air burst is taken from blowing exhaust air.

22. The method according to Claim 20 or 21, wherein the air for generating the compressed air burst is taken from machine operating air.

23. A use of a tubular electric linear motor (15; 25; 35; 45; 55) for the sole driving of the stretching bar (13; 23; 33; 43; 53) in a device (10; 20; 30; 40; 50) for blow molding containers from a preform according to one of Claims 1 through 19.

## Revendications

1. Dispositif (10) pour le soufflage sur matrice d'un récipient à partir d'une ébauche, avec un cylindre de soufflage (11) et une buse soufflante (12) maintenue sur ce dernier, dans laquelle il est possible de fixer l'ébauche (R) et avec une tige d'étirage (13) laquelle est entourée par le cylindre (11) et laquelle est susceptible de se déplacer à travers la buse (12), la buse (12) pouvant être alimentée en air comprimé par l'intermédiaire d'orifices (14) dans le cylindre (11), **caractérisé en ce que** la tige d'étirage (13) est entraînée par un seul moteur linéaire électrique tubulaire (15) dont le stator (15-1) est maintenu sur le cylindre (11) et dont l'induit (15-2) est relié à la tige d'étirage (13) et **en ce qu'**il est prévu au moins un trajet de courant d'air frais et/ou au moins un trajet de courant d'évacuation d'air vers ou à partir de la buse soufflante (12 ; 22 ; 32 ; 42 ; 52), au moins l'un des trajets passant à travers le stator et/ou à l'avant du stator (15-1 ; 25-1 ; 35-1 ; 45-1 ; 55-1) du moteur (15 ; 25 ; 35 ; 45 ; 55).

2. Dispositif selon la revendication 1, avec un piston de soufflage (16) qui entoure la tige d'étirage (13) et sur l'une des extrémités duquel est disposé la buse soufflante (12) et dont l'autre extrémité est logée dans le cylindre de soufflage (11) en étant susceptible de se déplacer en direction axiale, le piston (16) étant susceptible d'être soumis à de l'air comprimé à travers le cylindre (11) pour se déplacer vers l'extérieur de ce dernier.

3. Dispositif (20) selon la revendication 1 ou 2, sur lequel le cylindre de soufflage (21) et l'induit (25-2) du moteur (25) sont conformés et dimensionnés de sorte que l'induit (252) soit susceptible de se déplacer au moins en partie à l'intérieur du cylindre de soufflage (21).

4. Dispositif (20) selon l'une quelconque des revendications 1 à 3, sur lequel la hauteur de levée de l'induit (25-2) se situe entièrement dans une hauteur du cylindre de soufflage (21).

5. Dispositif (10; 20) selon l'une quelconque des revendications 1 à 4, sur lequel l'induit (15-2 ; 25-2) et la tige d'étirage (13 ; 23) sont conçus en monobloc.

6. Dispositif (10; 20) selon l'une quelconque des revendications 1 à 4, sur lequel l'induit (15-2 ; 25-2) et la tige d'étirage (13 ; 23) sont vissés l'un à l'autre.

7. Dispositif (10; 20) selon l'une quelconque des revendications 1 à 4, sur lequel l'induit (15-2 ; 25-2) et la tige d'étirage (13 ; 23) sont uniquement couplés l'un à l'autre en direction axiale.

8. Dispositif (40) selon l'une quelconque des revendications 1 à 7 sur lequel l'induit (45-2) est conçu en tant qu'un élément de la tige d'étirage (43).

9. Dispositif (50) selon, la revendication 8 sur lequel le stator (45-1) du moteur (45) est entouré au moins partiellement par le cylindre de soufflage (51) ou est conçu en tant qu'élément intégral du cylindre de soufflage (51).

10. Dispositif (50) selon la revendication 8 ou 9, sur lequel le stator (55-1) du moteur (55) est entouré au moins partiellement par le piston de soufflage (56) ou est conçu en tant qu'élément intégral du piston de soufflage (56).

11. Dispositif (30) pour le soufflage sur matrice d'un récipient à partir d'une ébauche, avec un cylindre de soufflage (31) et une buse soufflante (32) maintenue sur ce dernier, dans laquelle il est possible de fixer l'ébauche (R) et avec une tige d'étirage (33) laquelle est entourée par le cylindre (31) et laquelle est susceptible de se déplacer à travers la buse (32), la buse (32) pouvant être alimentée en air comprimé à travers le cylindre (31), **caractérisé en ce que** la tige d'étirage (33) est entraînée par un moteur linéaire électrique tubulaire (35) dont le stator (35-1) est relié par l'intermédiaire d'un bras (37) avec la tige d'étirage (33) et dont l'induit (352) est disposé avec un écart à la parallèle de la tige d'étirage (33) et relié de façon rigide avec le cylindre de soufflage (31) et moins un trajet de courant d'air frais et/ou au moins un trajet de courant d'évacuation d'air pour l'air comprimé étant prévu vers ou à partir de la buse soufflante (12 ; 22 ; 32 ; 42 ; 52) au moins l'un des trajets passant à travers le stator et/ou passant à l'avant du stator (15-1 ; 25-1 ; 35-1 ; 45-1 ; 55-1) du moteur (15 ; 25 ; 35 ; 45 ; 55).

12. Dispositif (10 ; 20 ; 40 ; 50) selon l'une quelconque des revendications précédentes, sur lequel l'induit (15-2 ; 25-2 ; 35-2) du moteur (15; 25; 35) est conçu en tant que tige magnétique creuse à travers laquelle est guidé l'air de soufflage de refroidissement.

13. Dispositif (10 ; 20 ; 40 ; 50) selon la revendication 12, sur lequel également la tige d'étirage (13 ; 23 ; 33 ; 43; 53) est conçue en tant que tige creuse et l'air de soufflage de refroidissement est guidé à travers l'induit (15-2 ; 25-2 ; 35-2 ; 45-2 ; 55-2) et la tige d'étirage (13 ; 23 ; 33 ; 43 ; 53).

14. Dispositif (10 ; 20 ; 40 ; 50) selon l'une quelconque des revendications précédentes, avec au moins un trajet de courant pour l'alimentation en eau, qui passe à travers le stator et/ou qui passe à l'avant du stator (15-1 ; 251 ; 35-1 ; 45-1 ; 55-1) du moteur (15 ; 25 ; 35 ; 45 ; 55).

15. Dispositif (10 ; 20 ; 30 ; 40 ; 50) selon l'une quelconque des revendications précédentes, avec au moins un trajet d'air d'alimentation et au moins un trajet d'évacuation d'air pour l'air comprimé vers ou à partir de la buse (12 ; 22 ; 32 ; 42 ; 52), au moins l'un des trajets passant par l'intermédiaire du moteur (15 ; 25 ; 35 ; 45 ; 55), de sorte que ce dernier soit refroidi par air.

16. Dispositif (10 ; 20 ; 30 ; 40 ; 50) selon l'une quelconque des revendications précédentes, avec au moins un trajet de courant pour l'alimentation en eau, qui passe par l'intermédiaire du moteur (15 ; 25 ; 35 ; 45 ; 55) de sorte que ce dernier soit refroidi par eau.

17. Dispositif (10 ; 20 ; 30 ; 40 ; 50) selon l'une quelconque des revendications précédentes, avec des nervures de refroidissement (K) pour le refroidissement par air du moteur (15 ; 25 ; 35 ; 45 ; 55).

18. Dispositif (10 ; 20 ; 30 ; 40 ; 50) selon l'une quelconque des revendications précédentes, sur lequel il est prévu une butée, contre laquelle l'induit (15-2 ; 25-2 ; 35-2 ; 45-2 ; 55-2) s'appuie dans sa position de repos supérieure.

19. Dispositif (10 ; 20 ; 30 ; 40 ; 50) selon l'une quelconque des revendications précédentes, sur lequel il est prévu un élément de rappel élastique, lequel compense le poids propre des pièces en mouvement, notamment de la tige d'étirage (13 ; 23 ; 33 ; 43 ; 53) et/ou de l'induit (15-2 ; 25-2 ; 35-2 ; 45-2 ; 55-2).

20. Procédé de manoeuvre d'un dispositif (10) selon l'une quelconque des revendications précédentes, dans lequel un rappel de la tige d'étirage (33) est assisté par une poussée d'air comprimé.

21. Procédé selon la revendication 20, dans lequel l'air pour créer la poussée d'air comprimé est prélevé dans une évacuation d'air de soufflage.

22. Procédé selon la revendication 20 ou 21, dans lequel l'air pour créer la poussée d'air comprimé est prélevé dans un air de travail de machine.

23. Utilisation d'un moteur électrique linéaire tubulaire (15 ; 25 ; 35 ; 45 ; 55) pour l'entraînement unique de la tige d'étirage (13 ; 23 ; 33 ; 43 ; 53) dans un dispositif (10 ; 20 ; 30 ; 40 ; 50) pour le soufflage sur matrice d'un récipient à partir d'un ébauche selon l'une quelconque des revendications 1 bis 19.
